# EUROPÄISCHE PATENTANMELDUNG

(11) **EP 1 785 268 A1**
(43) Veröffentlichungstag der Anmeldung: **16.05.2007**
(21) Anmeldenummer: 05024766.7
(22) Anmeldetag: 12.11.2005
(51) Int. Cl.: B32B 27/06, B32B 27/36, B32B 15/08, B44C 1/10

(54) **Dekorfolie**

(71) Anmelder: Hueck Folien Ges.m.b.H, 4342 Baumgartenberg (AT)
(72) Erfinder: Aigner, Johann, 4352 Klam (AT); Hillburger, Johann, 92712 Pirk (DE); Bergsmann, Martin, Dr., 4020 Linz (AT); Berger, Markus, 90491 Nürnberg (DE)
(74) Vertreter: Landgraf, Elvira

(57) **Zusammenfassung**

Dekorfolie zum Aufbringen auf beliebige Träger, dadurch gekennzeichnet, dass die Folie aus einer polymeren Trägerfolie, die mit einer metallischen Schicht und/oder einer Bedruckung und mindestens einer Schutzlackschicht versehen ist, besteht.

## Beschreibung

Die Erfindung betrifft eine Dekorfolie zur universellen Laminierung gegen beliebige Träger.

Die Aufbringung von dekorativen Schichten auf Träger erfolgt üblicherweise unter Verwendung einer Transferfolie, wobei die dekorativen Schichten auf den Träger transferiert werden und gegebenenfalls die Trägerfolie nach Übertragung auf den Träger abgezogen wird.

Aus der US 2003/0190485 ist ein tiefziehbarer Folienverbund für dekorative Zwecke bekannt, bestehend aus einer transluzenten oder transparenten Folienschicht, einer Klebeschicht, einer weiteren transparenten oder transluzenten Folie, die eine Metallschicht aufweist und einer weiteren Klebeschicht und einer Trägerfolie.
Die metallische Schicht ist also zwischen Trägerfolien einlaminiert.

Nachteil dieses Folienverbunds ist die mangelnde Beständigkeit gegen äußere Einflüsse. Durch bei der Anwendung auftretende Scherkräfte kann sich die Laminierung lösen, dadurch tritt Korrosion der metallischen Schicht auf.

Aufgabe der Erfindung war es, eine universell einsetzbare Dekorfolie bereitzustellen, die chemisch und mechanisch ausgezeichnet beständig ist und gegen beliebige Träger laminiert werden kann.

Gegenstand der Erfindung ist daher eine Dekorfolie zum Aufbringen auf beliebige Träger, dadurch gekennzeichnet, dass die Folie aus einer polymeren Trägerfolie, die mit einer metallischen Schicht und/oder einer Bedruckung und mindestens einer Schutzlackschicht versehen ist, besteht.

Als polymere Trägerfolien kommen beispielsweise flexible Kunststofffolien, beispielsweise aus PI, PP, MOPP, PE, PPS, PEEK, PEK, PEI, PSU, PAEK, LCP, PEN, PBT, PET, PA, PMMA, PC, COC, POM, ABS, PVC in Frage. Die Trägerfolien weisen vorzugsweise eine Dicke von 5 - 700 µm, bevorzugt 5 - 200 µm, besonders bevorzugt 5 - 50 µm auf.

Besonders bevorzugt werden tiefziehfähige Polyesterfolien, wie PET-G, A-PET oder O-PET verwendet.

Die Trägerfolie kann strukturiert, beispielsweise geprägt oder gebürstet, transparent oder transluzent, gefärbt, matt oder opak sein.

Auf die Trägerfolie wird eine metallische Beschichtung oder eine Bedruckung aufgebracht.
Diese Beschichtung kann je nach Erfordernis vollflächig oder partiell aufgebracht sein.
Als metallische Beschichtung kommen beispielsweise Al, Cu, Ag, Au, Ni, Cr, Pt, Pd und dergleichen in Frage. Ferner können als metallische Beschichtung auch Legierungen, Metallgemische oder Metallverbindungen, wie Oxide, Chromate oder Sulfide aufgebracht werden. Geeignet sind beispielsweise Cu/Al- oder AI/Cr- Legierungen, oder Metallverbindungen, insbesondere TiO₂, Cr-Oxide, ZnS, ITO, Bi-Oxid, ATO, FTO, ZnO, Al₂O₃, Zn-Chromat, Fe-Oxide, CuO und dergleichen.

Die metallische Beschichtung kann durch Druckverfahren, wie Tiefdruck, Siebdruck, Flexodruck, Digitaldruck, Curtain Coating und dergleichen, Metallisieren und ggf. Demetallisieren, Sputtern, Aufdampfen mittels eines PVD oder CVD-Verfahrens, Galvanisieren, Walzenauftragstechniken und dergleichen oder erfolgen.
Ferner kann die metallische Beschichtung durch Kaschieren mit einer Metallfolie, beispielsweise durch Heißkaschieren oder IR-gestützt unter Verwendung homologer Kleber aufgebracht werden.

In einem PVD- Verfahren wird die Beschichtung unter Vakuum (bis 10⁻¹² mbar, vorzugsweise 10⁻² bis 10⁻⁶ mbar) bei einer vom Dampfdruck und der Dicke der aufzubringenden Beschichtung abhängigen Temperatur auf dem Trägersubstrat beispielsweise durch thermisches Verdampfen, Lichtbogen- oder Elektronenstrahlverdampfen abgeschieden. Eine weitere Möglichkeit ist das Aufbringen der Beschichtung durch AC- oder DC-Sputtern, wobei je nach Dicke der aufzubringenden Schicht und eingesetztem Material das entsprechende Verfahren gewählt wird.

In einem CVD-Verfahren wird durch Mischen des aufzubringenden Stoffs mit einem Gas, Plasma oder mit einem Aktivierungsgas, beispielsweise CO, CO₂, Sauerstoff, Silane, Methan, Ammoniak und dergleichen, z.B.: mittels eines lonenstrahls eine chemische Reaktion hervorgerufen und der entstandene Stoff auf dem Träger abgeschieden. Auf diese Weise können mehrere reaktive Schichten gleichzeitig oder parallel aufgebracht werden, auf dem Trägersubstrat entsteht ein Farbeffekt.

Gegebenenfalls wird die das optisch aktive Merkmal tragende Schicht vorher mittels eines Inline-Plasma-, Corona- oder Flammprozesses behandelt und anschließend die erfindungsgemäße Beschichtung entweder inline oder in einem nachfolgenden Verfahrensschritt in einem PVD- oder CVD-Verfahren, Sputtern oder dergleichen, aufgebracht.
Durch energiereiches Plasma, beispielsweise Ar- oder Ar/O₂-Plasma wird die Oberfläche von eventuell vorhandenen Tonungsresten gereinigt. Dadurch wird die Haftung der partiellen oder vollflächigen Beschichtungen weiter verbessert.

Zum Kaschieren mit einer Metallfolie wird auf die bereitgestellte Kunststofffolie eine Dispersion bzw. eine Lösung eines homologen Kaschierklebemittels aufgebracht, anschließend in einem Trockenkanal das Dispergier- bzw. Lösungsmittel vollständig verdampft, worauf die Folie in einem Kaschierwerk bei der Schmelztemperatur des trockenen Kaschiermittels unter Druck mit der Metallfolie verbunden.

Die Dicke der metallischen Beschichtung beträgt üblicherweise 5 nm bis 30 µm, vorzugsweise 20 nm bis 3 µm.

Ferner kann das Trägersubstrat gegebenenfalls eine weitere Druckschicht mit optischen Eigenschaften, beispielsweise eine Schicht mit Farbpigmenten, mit Perlglanzpigmenten und dergleichen aufweisen.

Auf die metallische Beschichtung wird mindestens eine Schutzlackschicht aufgebracht.

Die Schutzlackschicht bzw. die Schutzlackschichten gewährleisten eine hohe chemische und mechanische Beständigkeit des Folienmaterials
Der Schutzlack kann ein chemisch, thermisch oder strahlenhärtendes, beispielsweise UV-härtendes oder elektronenstrahlhärtendes, Schutzlacksystem auf Basis eines Polyester-, eines Epoxy- oder Polyurethan-systems oder von deren Copolymeren sein.
Besonders geeignet ist ein Schutzlack bestehend aus einem aus mindestens 2 Komponenten bestehenden System auf Polyurethanbasis mit Grundkomponenten wie Polyester, PVC, PVOH, Polyvinylbutyral, Polyacrylat und/oder Epoxid, vernetzt mit aromatischen oder aliphatischen Isocyanaten.

Der Schutzlack kann unpigmentiert oder pigmentiert sein, wobei der Pigmentanteil bis zu 30% betragen kann, vorzugsweise bis zu 15%, wobei alle bekannten und üblichen Pigmente, beispielsweise anorganische und/oder organische Pigmente wie beispielsweise Titandioxid, Zinksulfid, Kaolin, Bariumsulfat, Aluminium-, Chrom- und Siliciumoxide, Metallpigmente (beispielsweise Kupfer, Aluminium, Silber, Gold, Eisen, Chrom und dergleichen), Metalllegierungen, wie Kupfer-Zink oder Kupfer- Aluminium als auch farbige ggf. organische Pigmente, wie Phthalocyaninblau, i-Indolidingelb, Dioxazinviolett, oder auch amorphe oder kristalline keramische Pigmente wie ITO, ATO, FTO und dergleichen oder auch Flüssigkristallpigmente geeignet sind.
Ferner sind auch farbige und/oder verkapselte Pigmente in chemisch, physikalisch oder reaktiv trocknenden Bindemittelsystemen verwendbar.
Als Farbstoffe kommen beispielsweise 1,1- oder 1,2- Chrom-Cobalt-Komplexe in Frage.

So können beispielsweise anorganische Korrosionsschutzadditive, wie Znphosphat oder organische Korrosionsschutzadditive, wie Toluoltriazolderivate zum Schutz metallischer Schichten zugegeben werden.

Um einen erhöhten Schutz gegen Strahlung verschiedener Wellenlängen zu ereichen können beispielsweise UV-Absorber, Radikalfänger (HALS), beispielsweise sterisch gehinderte Amine und dergleichen zugegeben werden.

Ferner können bekannte Antioxidantien, beispielsweise phenolische Antioxidantien, Flammschutzadditive, beispielsweise bekannte halogenierte oder halogenfreie Flammschutzadditive, Hochtemperatur-stabilisatoren basierend auf Disulfiden oder Thioethern zu gegeben werden.

Zur Erhöhung der mechanischen Beständigkeit, beispielsweise der Abriebbeständigkeit, der Scheer- und Dehnungssicherheit, der Walzfestigkeit und dergleichen werden vorzugsweise elastomere Modifikatoren, beispielsweise elastomere Polymere und Copolymere, wie EPR oder Nanopartikel und dergleichen zugegeben.

Die Dicke der Schutzlackschicht(en) beträgt etwa 1 bis 10 µm, vorzugsweise 2 bis 5 µm.

Der erfindungsgemäße Folienaufbau kann mittels eines Klebers auf den Träger aufgebracht werden.

Als Klebesysteme kommen bekannte Heißklebebeschichtungen, Heißklebefolien, PVC- oder Polyesterklebesystem in Frage.

Als Träger kommen dabei metallische Oberflächen, wie Stahl, Kunststoffe, Holz, Papier, Pappe, Gewebe, Vliese aus natürlichen oder Kunststofffasern, Glas, Keramik und dergleichen in Frage.

Der erfindungsgemäße Folienaufbau ist tiefziehfähig, hinterspritzbar und von hoher chemischer und mechanischer Beständigkeit und kann daher im Automobilbau, in der Architektur, im Möbelbau und für elektrische Geräte, Kühlschrank, (Weißware), Toaster, tragbare Elektrogeräte (Henkelware), Ghettoblaster, Wandpaneele, Innen- und Außendekoration, Audio- und Video-Computergehäuse u.a. verwendet werden.

## Patentansprüche

1. Dekorfolie zum Aufbringen auf beliebige Träger, **dadurch gekennzeichnet, dass** die Folie aus einer polymeren Trägerfolie, die mit einer metallischen Schicht und/oder einer Bedruckung und mindestens einer Schutzlackschicht versehen ist, besteht.

2. Dekorfolie nach Anspruch 1, **dadurch gekennzeichnet, dass** die polymere Trägerfolie eine tiefziehfähige Polyesterfolie ist.

3. Dekorfolie nach einem der Ansprüche 1 oder 2, **dadurch gekennzeichnet, dass** die metallische Schicht eine Schicht aus Al, Cu, Ag, Au, Ni, Cr, Pt, Pd, aus einer Cu/Al- oder Al/Cr-Legierung, oder aus einem Oxid, Sulfid oder Chromat eines Metalls besteht.

4. Dekorfolie nach einem der Ansprüche 1 bis 3, **dadurch gekennzeichnet, dass** die Dicke der metallischen Beschichtung 5 nm bis 30 µm beträgt.

5. Dekorfolie nach einem der Ansprüche 1 bis 4, **dadurch gekennzeichnet, dass** die Schutzlackschicht aus einem Schutzlacksystem auf Basis eines Polyester-, eines Epoxy- oder Polyurethan-systems besteht.

6. Dekorfolie nach einem der Ansprüche 1 bis 5, **dadurch gekennzeichnet, dass** die Dicke der Schutzlackschicht 1 bis 10 µm beträgt.

7. Dekorfolie nach einem der Ansprüche 1 bis 6, **dadurch gekennzeichnet, dass** die Schutzlackschicht Zusätze zur Erhöhung der mechanischen, chemischen Beständigkeit und zur Erhöhung des Widerstands gegen sichtbare und UV- Strahlung aufweist.

8. Dekorfolie nach einem der Ansprüche 1 bis 7, **dadurch gekennzeichnet, dass** die Folie eine weitere Schicht mit optischen Eigenschaften aufweist.

9. 7) Verwendung der Dekorfolie nach einem der Ansprüche 1 bis 8 im Automobilbau, in der Architektur, im Möbelbau und für elektrische Geräte, Kühlschrank, (Weißware), Toaster, tragbare Elektrogeräte (Henkelware), Ghettoblaster, Wandpaneele, Innen- und Außendekoration, Audio- und Video-Computergehäuse u.a.
